(19) Europäisches Patentamt
European Patent Office
Office européen des brevets

(11) Numéro de publication : **0 127 214**
**B1**

(12) # FASCICULE DE BREVET EUROPÉEN

(45) Date de publication du fascicule du brevet : **07.09.88**

(51) Int. Cl.[4] : **A 01 N 63/00**

(21) Numéro de dépôt : **84200590.2**

(22) Date de dépôt : **26.04.84**

(54) **Compositions contenant des produits pesticides biosynthétiques et au moins un phosphate et procédés pour leur fabrication et leur utilisation.**

(30) Priorité : **02.05.83 FR 8307399**

(43) Date de publication de la demande :
**05.12.84 Bulletin 84/49**

(45) Mention de la délivrance du brevet :
**07.09.88 Bulletin 88/36**

(84) Etats contractants désignés :
**AT BE CH DE FR GB IT LI NL SE**

(56) Documents cités :
**FR-A- 2 449 401**
**GB-A- 1 172 900**
**US-A- 3 150 062**
**CHEMICAL ABSTRACTS, vol. 90, no. 24, 11 juin 1979, page 109, résumé no. 188844p, COLUMBUS, OHIO (US)**

(73) Titulaire : **SOLVAY & Cie (Société Anonyme)**
**Rue du Prince Albert, 33**
**B-1050 Bruxelles (BE)**

(72) Inventeur : **Gago, Ignace**
**Chaussée de Nivelles 53**
**B-1420 Braine-l'Alleud (BE)**
Inventeur : **Detroz, René**
**Chaussée de Louvain 534**
**B-1328 Ohain (BE)**

**EP 0 127 214 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne des compositions contenant des produits pesticides biosynthétiques provenant de microorganismes de la famille des Bacillacées ainsi que des procédés pour leur production et leur utilisation.

Les produits pesticides biosynthétiques présentent de nombreux avantages par rapport aux pesticides chimiques, notamment du fait de leur grande spécificité. Ainsi, les pesticides biosynthétiques toxiques ou pathogènes pour des insectes sont en général non toxiques et non pathogènes pour l'homme et les autres êtres vivants. En outre, vu leur spécificité, ils ne mettent en général pas en danger les prédateurs et parasites naturels des insectes que l'on désire éliminer, ni les insectes bénéfiques. Ils ne sont pas phytotoxiques et ne laissent aucun résidu toxique. Enfin, les insectes ne paraissent pas développer une résistance à ce type de pesticides, contrairement à ce qui se passe lors de l'utilisation d'insecticides organiques de synthèse.

Les pesticides biosynthétiques peuvent être obtenus à partir de microorganismes très divers. Une classe de pesticides biosynthétiques des plus couramment utilisés dans la lutte contre certains insectes est obtenue à partir de Bacillus thuringiensis dont on connaît de nombreuses variétés.

Les pesticides biosynthétiques n'étant en général pas solubles, ils nécessitent la mise en œuvre de techniques particulières pour leur application. Ils peuvent se présenter sous forme de particules solides sèches ou sous forme de suspensions de particules solides dans un liquide adéquat. En général, ils sont mis en œuvre sous forme de suspensions que l'on pulvérise sur les zones infestées selon diverses techniques connues en elles-mêmes. Une technique fréquemment utilisée pour traiter de grandes surfaces telles que des forêts ou des grandes étendues de terres cultivées ou encore de grandes étendues d'eau, de marécages ou de rivières consiste à pulvériser par voie aérienne des suspensions de pesticides biosynthétiques.

On a proposé dans le brevet GB-A-1 172 900 de préparer une composition insecticide à base de Bacillus thuringiensis à laquelle on ajoute différents types de produits tels que des stabilisants ou d'autres ingrédients ainsi que des agents mouillants ioniques ou non ioniques. De façon générale, différents types de composés chimiques sont cités tels que la gélatine, la colle, la caséine, des éthers de cellulose, des stabilisants, des herbicides, des pesticides et autres composés tels que des polyphosphates de sodium mais aucun de ces produits n'est concrètement mis en œuvre.

On a également proposé dans la demande de brevet FR-A-2 449 401 un mélange d'additifs pour des insecticides microbiologiques comprenant de 30 à 90 parties en poids de sucres naturels et/ou de mélasses, de 5 à 60 parties en poids de supports minéraux et/ou de pigments minéraux et de 1 à 12 parties en poids d'un agent tensioactif. Le mélange d'additifs peut en outre contenir un agent tampon tel qu'un dihydrogénophosphate de sodium ou de potassium.

On a proposé, dans le brevet US-A-3 087 865 (ROHM & HAAS Co) de préparer une composition pesticide biosynthétique qui contient les spores, les corps d'inclusion (cristaux) et les toxines solubles provenant de microorganismes du genre Bacillus tels que le Bacillus thuringiensis. Ces compositions peuvent se présenter sous forme de suspensions ou de poudres sèches et peuvent contenir divers additifs. On peut ainsi utiliser la poudre obtenue par séchage du gâteau de filtration du produit de fermentation (poudre) éventuellement dispersée dans de l'eau (crème) ou un concentré du milieu de fermentation (pâte). Les suspensions concentrées étant visqueuses, il est indispensable de les diluer fortement pour que le produit puisse être mis en œuvre correctement. Les suspensions pulvérisées ont de ce fait une concentration en matières actives assez faible. Dès lors, les étendues que l'on peut traiter par voie aérienne, en un seul vol, sont réduites. En outre, il est fréquent que les suspensions décantent au cours du stockage.

La présente invention vise à procurer des compositions contenant des produits pesticides biosynthétiques ne présentant pas les inconvénients des compositions connues. Elle vise à procurer des compositions de produits pesticides biosynthétiques qui sont stables et conservent une bonne activité au cours du stockage et qui ont une concentration en matières actives élevée de manière à ce que le volume à transporter pour une dose de matière active donnée soit faible. Ces compositions donnent des suspensions concentrées qui sont fluides et stables, qui ont une viscosité suffisamment faible pour pouvoir être aisément pulvérisées, qui n'ont pas tendance à décanter, qui sont faciles à disperser, diluer ou émulsionner dans des diluants tels que le gasoil et l'eau, si une dilution s'avère indispensable, sans que l'on observe des phénomènes de floculation ou de décantation et sans que l'on doive avoir recours à une agitation particulière, qui collent bien sur les végétaux de manière à leur permettre d'exercer toute leur activité, qui résistent bien au froid et enfin qui ne perturbent pas l'environnement. Les compositions contenant des produits pesticides biosynthétiques selon l'invention donnent des suspensions concentrées qui conviennent particulièrement bien aux applications par voie aérienne et qui peuvent être utilisées telles quelles sans dispersion supplémentaire dans le gasoil. Dans ces suspensions, les matières organiques pesticides ne coagulent pas.

L'invention concerne des compositions contenant des produits pesticides biosynthétiques provenant de microorganismes de la famille des Bacillacées ainsi qu'au moins un phosphate inorganique condensé cyclique soluble dans l'eau ou au moins un mélange d'un phosphate inorganique soluble dans l'eau et un

agent mouillant choisi parmi les produits polyhydroxylés, les phosphates étant présents à des doses de 0,03 à 3 fois le poids à sec des pesticides biosynthétiques.

Par phosphate inorganique soluble dans l'eau selon l'invention, on entend désigner les phosphates inorganiques qui sont ajoutés aux pesticides biosynthétiques ou à leurs précurseurs à une quelconque étape de leur fabrication ou de la fabrication des compositions selon l'invention pour autant qu'elle soit postérieure à la fermentation des microorganismes qui les génèrent et dont la solubilité dans l'eau est d'au moins 5 g/l et de préférence d'au moins 10 g/l.

Par phosphates acides, on entend désigner les dérivés des acides phosphoriques répondant à la formule

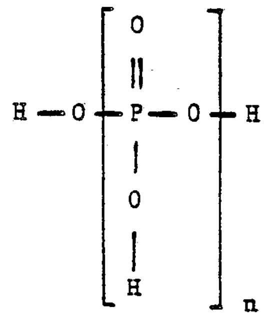

où n = 1 à 3, à savoir les acides ortho-, pyro- et tripoly-phosphoriques, qui ne sont que partiellement salifiés. Ceux-ci peuvent être mis en œuvre tels quels, sous la forme d'acides phosphoriques partiellement salifiés tels que les mono-H ou di-H orthophosphates. On peut aussi les mettre en œuvre sous la forme de mélanges des phosphates complètement salifiés correspondants avec des acides.

Par phosphate condensé cyclique, on entend désigner tous les phosphates présentant une structure cyclique appelés également métaphosphates ou polymétaphosphates, en ce compris les polyphosphates à chaînes contenant des cycles dans leur structure que l'on appelle parfois ultraphosphates. Ces phosphates condensés présentent plusieurs séquences de liaisons phosphore-oxygène dans leur molécule. Comme phosphates condensés cycliques, les trimétaphosphates, les tétramétaphosphates et les hexamétaphosphates sont avantageux. Parmi ceux-ci, les hexamétaphosphates conviennent bien. Comme polyphosphates, ceux qui contiennent en moyenne moins de 100 atomes et le plus souvent moins de 50 atomes de phosphore dans leur molécule conviennent en général. Parmi ceux-ci, les polyphosphates contenant en moyenne au moins 6 atomes de phosphore dans leur molécule conviennent bien. De bons résultats ont été obtenus avec les polyphosphates vitreux.

Les phosphates selon l'invention se présentent en général sous la forme de sels de métaux alcalins, de métaux alcalino-terreux ou d'ammonium. De bons résultats ont été obtenus avec les phosphates de sodium, de potassium ou d'ammonium. Les meilleurs résultats ont été obtenus avec des phosphates de sodium.

Des mélanges de phosphates tels que définis ci-avant peuvent également convenir.

En général, on choisit un phosphate, un mélange de phosphates différents, ou encore un mélange de phosphates et d'acides qui est capable de conférer à l'eau un pH voisin de la neutralité ou légèrement acide. En général, on choisit des phosphates ou des mélanges à base de phosphates qui sont capables de conférer à l'eau un pH ne dépassant pas 7. De préférence, on choisit des phosphates ou des mélanges à base de phosphates tels que les solutions aqueuses contenant de 10 à 300 g/l de ces phosphates aient un pH ne dépassant pas 6. Les phosphates ou mélanges de phosphates sont le plus souvent choisis de manière à ce que de telles solutions aqueuses aient un pH d'au moins 3, de manière avantageuse d'au moins 3,5 et de préférence d'au moins 4.

Bien que tous les phosphates tels que définis ci-avant conviennent, la préférence est donnée aux phosphates condensés disponibles commercialement dans lesquels le rapport $Na_2O$ : $P_2O_5$ est d'environ 1 à 1,2 tels que l'hexamétaphosphate de sodium et des mélanges de polyphosphates vitreux appelés sels de Graham qui sont également dénommés hexamétaphosphate de sodium.

Dans les compositions selon l'invention, les phosphates sont présents à des doses variables. En général, leur poids est d'au moins 0,03 fois et le plus souvent d'au moins 0,1 fois celui des produits pesticides biosynthétiques secs. En général, il ne dépasse pas 3 fois et le plus souvent pas 2 fois le poids à sec des pesticides biosynthétiques.

Par produits pesticides biosynthétiques selon l'invention, on entend désigner les produits pesticides biosynthétiques qui proviennent de microorganismes de la famille des Bacillacées et qui permettent de lutter contre les parasites animaux et végétaux de l'homme, des animaux et des végétaux (à l'exclusion des microorganismes provoquant les maladies de l'homme et des animaux) et contre les agents vecteurs de maladies parasitaires et virales. Ces pesticides biosynthétiques peuvent avoir ainsi une action fongistatique ou fongicide, appelée également action anticryptogamique, une action herbicide ou encore

une action contre les arthropodes et plus particulièrement contre les insectes. L'invention s'applique tout particulièrement aux pesticides biosynthétiques provenant des microorganismes de la famille des Bacillacées qui ont une action insecticide.

Les pesticides biosynthétiques contenus dans les compositions selon l'invention proviennent de préférence de microorganismes du genre Bacillus. Parmi ceux-ci conviennent particulièrement bien les pesticides biosynthétiques dérivés de microorganismes tels que le Bacillus thuringiensis, le Bacillus sphaericus, le Bacillus popilliae, le Bacillus cereus, le Bacillus lentimorbus et le Bacillus fribourgensis.

De bons résultats ont été obtenus avec les Bacillus thuringiensis de tous sérotypes et plus particulièrement avec ceux des sérotypes 1, 3a, 3a3b, 7, 9, 10 et 14. Les meilleurs résultats ont été obtenus avec les Bacillus thuringiensis de sérotypes 1 (variété thuringiensis), 3a3b (variété Kurstaki), 7 (variété Aizawa) et 14 (variété israëlensis).

Les pesticides biosynthétiques contenus dans les compositions selon l'invention peuvent également provenir de microorganismes quelconques transformés par insertion d'ADN codant pour la fabrication de toxines et provenant de microorganismes pathogènes de la famille des Bacillacées.

Les pesticides biosynthétiques peuvent se trouver dans les compositions selon l'invention sous des formes très diverses. Ainsi, ils peuvent se présenter sous la forme des organismes eux-mêmes à un stade quelconque de leur évolution, en ce comprises les formes végétatives éventuelles, tels quels, en association avec leur milieu de culture, sous forme totalement ou partiellement lysée, sous forme totalement ou partiellement sporulée, sous une forme ayant libéré partiellement ou totalement les spores par divers moyens tels que l'autolyse bactérienne, sous la forme des produits qui sont excrétés spontanément par les organismes tels que les exotoxines, sous la forme des produits que l'on peut extraire de ces organismes tels que les endotoxines par tout méthode connue en elle-même impliquant ou non une lyse de l'organisme en cause, sous la forme des produits éventuellement libérés par les organismes au cours de certaines étapes de leur évolution (cristaux associés ou non aux spores) ou encore sous plusieurs de ces formes simultanément.

Ces différentes formes peuvent éventuellement être associées à des résidus du milieu de culture. De bons résultats ont été obtenus avec le mélange contenant des spores, les cristaux associés et éventuellement des exotoxines qui se forme spontanément lors de l'autolyse de la bactérie en fin de sporulation. Un tel mélange peut contenir, outre les spores, les cristaux associés ou non aux spores et les exotoxines éventuelles, des cellules ou des débris de cellules ainsi que des produits solides résiduaires du milieu nutritif mis en œuvre lors de la culture.

Les compositions selon l'invention peuvent également contenir plusieurs pesticides biosynthétiques d'origines différentes.

Les compositions selon l'invention peuvent contenir en outre divers autres additifs. Elles peuvent contenir des parfums ou des masques d'odeurs et divers préservatifs tels que des antioxydants, des agents antibactériens (bactéricides ou bactériostatiques), des agents susceptibles d'absorber les rayonnements ultra-violets (qui pourraient éventuellement causer la désactivation du pesticide biosynthétique), des charges et des agents régulateurs de pH. Elles peuvent aussi contenir des pesticides organiques de synthèse (pesticides chimiques).

Les compositions selon l'invention peuvent enfin contenir d'autres additifs dont la nature et la fonction dépendent de l'utilisation qui en est faite. Ainsi, si la composition est destinée à être pulvérisée, éventuellement après dispersion dans un liquide adéquat, sur les surfaces des plantes, elle peut contenir des adhésifs, des collants ou des agents mouillants de manière à accroître l'adhérence de la composition. Les agents mouillants peuvent être des produits hydrophiles de tous types et notamment des produits choisis parmi les produits polyhydroxylés tels que la glycérine, les glucides ou l'éthylèneglycol, et les agents tensioactifs. Ceux-ci peuvent être des agents tensioactifs hydrophiles ou des mélanges d'agents tensioactifs contenant un agent tensioactif hydrophile. Des agents tensioactifs hydrophiles convenant bien sont ceux qui ont une balance hydrophile-lipophile (HLB), telle que définie par P. Blonchard (Parf. Cosm. Sav., 1969, 12 (2), février, p. 82 à 91), d'au moins 9 et le plus souvent d'au moins 10.

Lorsque les compositions selon l'invention sont dispersées ou sont destinées à être dispersées dans un liquide, on choisit le plus souvent des additifs qui sont solubles ou dispersibles dans le solvant constitutif de la phase liquide. En général, on choisit des additifs qui sont solubles dans l'eau.

Les divers additifs sont en général présents en quantité ne dépassant pas le poids de pesticides biosynthétiques. Le plus souvent, ils sont présents en quantités de 1 à 100 % du poids des pesticides biosynthétiques. La teneur en agents mouillants ne dépasse en général pas 1 et de préférence 0,8 fois le poids de pesticides biosynthétiques. Le plus souvent les agents mouillants sont présents à raison de 1 à 75 % du poids des pesticides biosynthétiques.

Les compositions selon l'invention peuvent enfin également contenir des résidus de la fabrication du pesticide biosynthétique.

Les compositions selon l'invention peuvent se présenter sous forme de poudres sèches ou sous forme de suspensions dans un liquide.

Les compositions sous forme de poudres sèches contiennent un pesticide biosynthétique sous la forme de poudre séchée, un phosphate selon l'invention ainsi qu'éventuellement d'autres additifs. Le pesticide biosynthétique sous la forme de poudre séchée mis en œuvre peut contenir de petites quantités d'eau. Dans le cas du Bacillus thuringiensis, il comprend en général des spores, des cristaux associés et

éventuellement des exotoxines et contient en général, après séchage, moins de 15 % en poids d'eau et habituellement moins de 12 % d'eau. Le plus souvent il contient de 2 à 10 % d'eau.

La teneur en pesticides biosynthétiques dans les compositions sous forme de poudres est en général de 20 à 98 % et le plus souvent de 30 à 90 % du poids de la composition et celle des phosphates condensés est en général de 2 à 80 % et le plus souvent de 10 à 70 % du poids de la composition. Ces compositions peuvent en outre contenir de 0 à 50 % et le plus souvent de 0,1 à 30 % en poids d'additifs divers.

La teneur en pesticides biosynthétiques dans les compositions sous forme de poudres est en général de 20 à 90 % et le plus souvent de 30 à 85 % du poids de la composition et celle des phosphates acides est en général de 10 à 80 % et le plus souvent de 15 à 70 %. Dans le cas où la composition contient des phosphates acides, des teneurs minimales de l'ordre de grandeur de 10 % de ces phosphates et/ou la présence d'agents mouillants tels que la glycérine se sont avérées indispensables.

Les compositions selon l'invention sous forme de poudres sèches contiennent en général un phosphate ou un mélange à base de phosphate de nature et en quantités telles que lorsqu'elles sont délayées dans au minimum une fois leur poids d'eau, elles lui confèrent un pH ne dépassant pas 7 et de préférence ne dépassant pas 6. En général, on veille à ce que le pH des suspensions ainsi obtenues ne soit pas inférieur à 3,0 et de préférence pas inférieur à 3,5.

Lorsque les compositions selon l'invention se présentent sous forme de suspensions, elles contiennent en outre un solvant. Ce dernier doit être inerte vis-à-vis des pesticides biosynthétiques et il ne doit notamment pas les désactiver. Le solvant peut être constitué par un solvant unique ou par un mélange de solvants. Le plus souvent, les solvants choisis sont ceux qui dissolvent les phosphates. En général, le solvant contient de l'eau. De bons résultats ont été obtenus lorsque le solvant contient au moins 60 % et de préférence au moins 80 % en poids d'eau.

Les compositions selon l'invention se présentent de manière avantageuse sous la forme d'une suspension de particules solides de pesticides biosynthétiques dans un liquide contenant le solvant, les phosphates ainsi que les additifs éventuels. Ces suspensions concentrées contiennent en général de 3 à 40 % en poids et le plus souvent de 5 à 30 % en poids de pesticides biosynthétiques et de 60 à 97 % en poids et le plus souvent de 70 à 95 % en poids de liquide. Le liquide peut contenir de 60 à 99 % en poids de solvant et une quantité de phosphates ne dépassant en général pas 50 % et de préférence 40 % du poids du liquide et le plus souvent supérieure à 1 % et de préférence supérieure à 3 % du poids du liquide. Le liquide peut éventuellement contenir de 0,01 à 60 % en poids et le plus souvent de 0,1 à 40 % en poids d'autres additifs.

Les compositions selon l'invention sous forme de suspensions sont thixotropiques de sorte que leur viscosité dépend fortement de l'agitation à laquelle elles sont soumises.

Les compositions selon l'invention sous forme de suspensions dans un liquide contenant de l'eau ont un pH ne dépassant en général pas 7 et de préférence pas 6. En général leur pH est supérieur à 3 et de préférence à 3,5.

La présente invention concerne également des procédés pour la fabrication des compositions selon l'invention.

Les phosphates selon l'invention sont mis en œuvre, pour former les compositions selon l'invention, à une quelconque étape de la fabrication des pesticides biosynthétiques ou de leurs précurseurs éventuels ou de la fabrication des compositions selon l'invention pour autant qu'elle soit postérieure à la fermentation des microorganismes qui génèrent lesdits pesticides.

Un procédé qui convient pour la fabrication des compositions selon l'invention consiste à prélever le milieu de culture des microorganismes générateurs des produits pesticides biosynthétiques, à en séparer de l'eau par des techniques habituelles de séparation d'eau telles que la centrifugation, l'ultrafiltration, la précipitation par addition d'un non-solvant tel que l'acétone ou la floculation de manière à obtenir une pâte.

Dans le cas du Bacillus thuringiensis le milieu de culture est prélevé par exemple à la fin de la phase de sporulation.

Un autre procédé consiste à séparer du milieu de culture des microorganismes générateurs de produits pesticides biosynthétiques, à la fin de la phase de sporulation, des fractions riches en cristaux ou en spores ou en ces deux produits simultanément. Ces fractions sont ensuite traitées selon les mêmes techniques que celles utilisées pour le traitement des pâtes.

Pour obtenir des compositions sous forme de poudres sèches, on sèche la pâte ainsi obtenue par des techniques habituelles telles que le séchage par atomisation, le séchage par lyophilisation ou le séchage en tambour de manière à obtenir des particules solides contenant en général moins de 15 % et de préférence moins de 12 % d'eau. Les particules solides de pesticide sont mélangées avec le phosphate selon l'invention sous forme solide et avec les autres additifs éventuels. Une technique avantageuse consiste à incorporer le phosphate et les autres additifs éventuels au cours du broyage des particules solides de pesticide.

Une autre technique consiste à ajouter le phosphate et les autres additifs éventuels à la pâte avant de la sécher et à soumettre le mélange au séchage selon l'une ou l'autre des techniques indiquées ci-avant.

Pour obtenir les compositions selon l'invention sous forme de suspensions, on peut disperser les particules solides de pesticide dans une phase liquide qui contient de préférence de l'eau et qui contient

en outre le phosphate ainsi que les autres additifs éventuels, pour former une crème.

Une autre technique consiste à incorporer, dans la pâte obtenue après séparation d'eau du milieu de fermentation, les phosphates, éventuellement sous la forme d'une solution concentrée, ainsi que les autres additifs éventuels.

La présente invention concerne également un procédé pour l'utilisation des compositions.

Les compositions selon l'invention peuvent être utilisées comme pesticides et plus particulièrement comme agents pour éliminer les insectes à un stade quelconque de leur développement. Pour ce faire, elles sont pulvérisées sur les surfaces infestées selon toutes méthodes connues en elle-mêmes telles que la pulvérisation manuelle, la pulvérisation mécanique et plus particulièrement la pulvérisation par voie aérienne. Elles peuvent notamment être pulvérisées sur les surfaces infestées par des insectes et plus particulièrement par des lépidoptères, des diptères, des coléoptères, des aphaniptères, des orthoptères, des isoptères et des homoptères.

Les doses à mettre en œuvre sont fonction du pesticide biosynthétique utilisé et de l'agent pathogène à éliminer.

Dans le cas du Bacillus thuringiensis et plus particulièrement des sérotypes 1, 3a3b, 7 et 14, on pulvérise en général de 50 à 5 000 g de particules solides à l'hectare. Les compositions selon l'invention peuvent être pulvérisées telles quelles lorsqu'elles se présentent sous forme de suspensions. Elles peuvent être également dispersées, diluées ou émulsionnées dans un diluant comme l'eau ou un diluant organique tel qu'un produit de la distillation du pétrole (par exemple le gasoil). Dans ce cas, on les dilue par 1 à 300 fois et de préférence 4 à 120 fois leur volume de diluant.

Afin d'illustrer l'invention, on donne ci-après des exemples de compositions selon l'invention (exemples 2 à 8) ainsi que de composition de comparaison (exemple 1).

## Exemple 1

Le mélange obtenu lors de la fermentation du Bacillus thuringiensis sérotype 3a3b (variété Kurstaki) B.t.3) est, après sporulation, centrifugé pour donner une pâte contenant environ 10 à 12 % de matières sèches. La pâte est séchée par atomisation.

La poudre primaire ainsi obtenue présente, par mg, une activité de 80 000 unités internationales (BUI) mesurée à l'aide d'Anagasta kuhniella Z. selon la méthode de titrage biologique de L. Charmoille et coll. (Phytiatrie-Phytopharmacie, 1974, 23, p. 223-234).

Lorsqu'on mélange 40 g de poudre primaire avec 210 g d'eau, on ne peut former ni une pâte ni une suspension. Le mélange, appelé produit 1, est hétérogène et comprend de la poudre sèche ainsi que de gros agglomérats de poudre humide.

## Exemples 2 à 7

La même poudre primaire que celle utilisée à l'exemple 1 a été utilisée pour préparer 6 compositions différentes appelées produits 2 à 7.

On prélève 40 g de cette poudre que l'on met en suspension dans un mélange liquide contenant divers additifs. La nature et les proportions des additifs sont données au Tableau I ci-après.

La viscosité des suspensions obtenues a été mesurée à l'aide d'un viscosimètre Brookfield RVT à une vitesse de 10 tours par minute.

La dispersibilité de la suspension dans l'eau a été mesurée selon la technique ci-après. On prélève 5 cm$^3$ de suspension que l'on verse dans 250 ml d'eau disposée dans un verre à pied. Si le produit se disperse instantanément, la dispersibilité est jugée parfaite (PFT). Si le produit se disperse complètement après un retournement du verre à pied, la dispersibilité est jugée très bonne (TB). Après 2 retournements du verre à pied, elle est jugée bonne (B). S'il est nécessaire de soumettre le verre à pied à plus de deux retournements pour disperser le produit, la dispersibilité est jugée insuffisante (I).

Les résultats de ces évaluations ainsi que le pH des suspensions sont donnés au Tableau I ci-après.

Tableau I

| PRODUIT | 2 | 3 | 4 | 5 | 6 | 7 |
|---|---|---|---|---|---|---|
| Composition, % | | | | | | |
| - poudre primaire de B.t.3a3b | 16 | 16 | 16 | 16 | 16 | 16 |
| - hexamétaphosphate de Na | 15 | 15 | 2 | | | |
| - $NaH_2PO_4$ | | | | 15 | | |

Tableau I (Fortsetzung)

| PRODUIT | 2 | 3 | 4 | 5 | 6 | 7 |
|---|---|---|---|---|---|---|
| - $Na_3PO_4.12H_2O$ | | | | | 10 | |
| - tripolyphosphate de Na | | | | | | 3 |
| - glycérol | | 10 | 10 | 10 | | |
| - eau | 69 | 59 | 72 | 59 | 74 | 81 |
| Propriétés | | | | | | |
| - pH | 5,4 | 5,5 | 5,8 | 4,1 | 12,6 | 8,5 |
| - viscosité, mPa.s | 430 | 300 | 820 | 580 | 5800 | 5500 |
| - dispersibilité | PFT | PFT. | B | TB | I(10)* | I(4)* |

* nombre de retournements nécessaires pour obtenir une dispersion complète.

Exemple 8

Le mélange obtenu lors de la fermentation du Bacillus thuringiensis sérotype 14 (B.t.14) est, après sporulation, centrifugé pour donner une pâte que l'on sèche par atomisation.

La poudre primaire ainsi obtenue présente par mg une activité d'environ 10 000 unités internationales (ITU) mesurée à l'aide d'Aedes Aegypti selon la méthode de titrage biologique de H. de Barjac et I. Larget, WHO-VBC-79.744.

On prélève 40 g de cette poudre que l'on met en suspension dans un mélange liquide contenant 172,5 g d'eau, 37,5 g d'hexamétaphosphate de sodium pour former une composition appelée produit 8.

La suspension ainsi obtenue a une viscosité mesurée selon la technique indiquée aux exemples 2 à 7 de 490 mPa.s. Sa dispersibilité dans l'eau est très bonne (TB). Son activité est de 2 800 ITU par mg de suspension.

**Revendications**

1. Compositions contenant des produits biosynthétiques provenant de microorganismes de la famille des Bacillacées caractérisées en ce qu'elles contiennent

au moins un phosphate inorganique condensé cyclique soluble dans l'eau ou

au moins un mélange d'un phosphate inorganique acide soluble dans l'eau et un agent mouillant choisi parmi les produits polyhydroxylés, les phosphates étant présents à des doses de 0,03 à 3 fois le poids à sec des pesticides biosynthétiques.

2. Compositions selon la revendication 1, caractérisées en ce qu'elles contiennent de l'hexamétaphosphate de sodium.

3. Compositions selon la revendication 1 ou 2, caractérisées en ce qu'elles contiennent de la glycérine.

4. Compositions selon l'une quelconque des revendications 1 à 3, caractérisées en ce qu'elles se présentent sous la forme d'une suspension de particules solides des produits pesticides biosynthétiques dans une solution aqueuse contenant le phosphate.

5. Compositions selon la revendication 1 ou 2, caractérisées en ce qu'elles se présentent sous la forme d'un mélange solide de particules des produits pesticides biosynthétiques contenant au moins un phosphate à l'état solide.

6. Procédé pour la fabrication de compositions selon l'une quelconque des revendications 1 à 4, caractérisé en ce qu'on prélève le milieu de culture des microorganismes, on en sépare l'eau, on sèche la pâte ainsi obtenue de manière à obtenir des particules solides contenant moins de 15 % d'eau et on disperse la poudre sèche ainsi obtenue dans une solution aqueuse contenant le phosphate.

7. Procédé pour la fabrication de compositions selon l'une quelconque des revendications 1 à 3, 5, caractérisé en ce qu'on prélève le milieu de culture des microorganismes, on en sépare l'eau, on sèche la pâte ainsi obtenue de manière à obtenir des particules solides contenant moins de 15 % d'eau et soumet les particules solides à un broyage en présence du phosphate.

8. Procédé pour éliminer les insectes caractérisé en ce qu'on pulvérise sur les surfaces infestées les compositions selon l'une quelconque des revendications 1 à 7.

**Claims**

1. Compositions containing biosynthetic products originating from microorganisms of the family of Bacillaceae, characterized in that they contain

at least one watersoluble condensed cyclic inorganic phosphate or

at least one mixture of a watersoluble acid inorganic phosphate and a wetting agent chosen from among polyhydroxylic products, the phosphates being present at doses of 0.03 to 3 times the dry weight of the biosynthetic pesticides.

2. Compositions according to Claim 1, characterized in that they contain sodium hexametaphosphate.

3. Compositions according to Claim 1 or 2, characterized in that they contain glycerol.

4. Compositions according to any one of Claims 1 to 3, characterized in that they are in the form of a suspension of solid particles of the biosynthetic pesticidal products in an aqueous solution containing the phosphate.

5. Compositions according to Claim 1, characterized in that they are in the form of a solid mixture of particles of the biosynthetic pesticidal products containing at least one phosphate in the solid state.

6. Process for the preparation of compositions according to any one of Claims 1 to 4, characterized in that the culture medium of the microorganisms is taken, the water is separated off, the paste thus obtained is dried in a manner such that solid particles containing less than 15 % of water are obtained, and the dry powder thus obtained is dispersed in an aqueous solution containing the phosphate.

7. Process for the preparation of compositions according to any one of Claims 1 to 3 and 5, characterized in that the culture medium of the microorganisms is taken, the water is separated off, the paste thus obtained is dried in a manner such that solid particles containing less than 15 % of water are obtained, and the solid particles are subjected to pulverisation in the presence of the phosphate.

8. Method of eliminating insects, characterized in that the compositions according to any one of Claims 1 to 7 are sprayed onto the infested areas.

**Patentansprüche**

1. Zusammensetzungen enthaltend biosynthetische Produkte aus Mikroorganismen der Familie der Bazillazeen, dadurch gekennzeichnet, daß sie enthalten:

mindestens ein anorganisches kondensiertes, zyklisches, wasserlösliches Phosphat oder

mindestens eine Mischung eines wasserlöslichen sauren anorganischen Phosphats mit einem Befeuchtungsmittel, ausgewählt unter den polyhydroxylierten Produkten, wobei die Phosphate anwesend sind in der 0,03 bis 3-fachen Menge des Trockengewichtes der biosynthetischen Pestizide.

2. Zusammensetzungen gemäß Anspruch 1, dadurch gekennzeichnet, daß sie Natriumhexametaphosphat enthalten.

3. Zusammensetzungen gemäß Anspruch 1 oder 2, dadurch gekennzeichnet, daß sie Glycerin enthalten.

4. Zusammensetzungen gemäß einem der Ansprüche 1 bis 3, dadurch gekennzeichnet, daß sie in Form einer Suspension der festen biosynthetischen Pestizidteilchen in einer wässerigen, das Phosphat enthaltenden Lösung vorliegen.

5. Zusammensetzungen gemäß einem der Ansprüche 1 oder 2, dadurch gekennzeichnet, daß sie in Form einer festen Mischung der biosynthetischen Pestizidteilchen, enthaltend mindestens ein Phosphat im festem Zustand, vorliegen.

6. Verfahren zur Herstellung von Zusammensetzungen gemäß einem der Ansprüche 1 bis 4, dadurch gekennzeichnet, daß man das Kulturmedium der Mikroorganismen abnimmt, man das Wasser abtrennt, man die so erhaltene Paste trocknet, in solcher Weise, daß man feste Teilchen erhält, die wenigstens 15 % Wasser enthalten und man das so erhaltene getrocknete Pulver in einer wässerigen, phosphatenthaltenden Lösung dispergiert.

7. Verfahren zur Herstellung der Zusammensetzungen gemäß einem der Ansprüche 1 bis 3 und 5, dadurch gekennzeichnet, daß man das Kulturmedium der Mikroorganismen abnimmt, man das Wasser abtrennt, man die so erhaltene Paste trocknet, in solcher Weise, daß man feste Teilchen erhält, die wenigstens 15 % Wasser enthalten und man die festen Teilchen in Anwesenheit des Phosphats einer Mahlung unterwirft.

8. Verfahren zur Vernichtung von Insekten, dadurch gekennzeichnet, daß man auf die infizierten Flächen die Zusammensetzungen gemäß einem der Ansprüche 1 bis 7 aufstäubt.